# FASCICULE DE BREVET EUROPEEN

(11) **EP 0 851 551 B1**
(45) Date de publication et mention de la délivrance du brevet: **25.08.2004**
(21) Numéro de dépôt: 97403169.2
(22) Date de dépôt: 29.12.1997
(51) Int. Cl.: H02G 3/04

(54) **Procédé et dispositif pour affermir le maintien sur une goulotte d'un quelconque accessoire à rapporter par emboîtement sur le socle de celle-ci**
Verfahren und Vorrichtung zum Verbessern des Haltens eines Zubehörs mit Schnappbefestigung an einem Kabelrinnensockel
Process and device for increasing the hold of an accessory to be snapped in a raceway base

(30) Priorité: 31.12.1996 FR 9616300
(43) Date de publication de la demande: 01.07.1998
(73) Titulaire: LEGRAND, 87000 Limoges (FR); LEGRAND SNC, 87000 Limoges (FR)
(72) Inventeur: Decore, Bertrand, 72650 La Chapelle Saint Aubin (FR); Perrignon De Troyes, François, 72140 Mont Saint Jean (FR)
(74) Mandataire: Santarelli

(56) Documents cités:
- DE-U- 7 701 076
- DE-U- 8 409 752

## Description

La présente invention concerne d'une manière générale les goulottes, c'est-à-dire les profilés composés d'un socle dont la section transversale est ouverte et d'un couvercle.

Elle vise plus particulièrement, mais non nécessairement exclusivement, celles de ces goulottes qui sont destinées au logement et à la protection d'un quelconque matériel électrique.

Il peut s'agir par exemple, de moulures, c'est-à-dire de goulottes de petites dimensions, qui ne sont mises en oeuvre que pour le seul logement, et la protection, de quelconques conducteurs électriques.

Mais il peut s'agir également de goulottes de dimensions suffisantes pour assurer, en sus, le logement, et la protection, de quelconques appareillages électriques, tels que socles de prise de courant ou autres.

En général, leur socle, qui est en matière synthétique, est réalisé par extrusion.

Généralement, également, mais non nécessairement exclusivement, il présente, extérieurement, en section transversale, un profil en U, avec une semelle médiane, deux ailes latérales, et, éventuellement, une ou plusieurs cloisons internes parallèles à ces dernières.

Il est en outre conformé de manière à pouvoir recevoir, par emboîtement, et, le plus souvent, par encliquetage, un couvercle ou tronçon de couvercle propre à le fermer longitudinalement sur une partie au moins de sa longueur, et/ou, en substitution, localement, à un tel couvercle ou tronçon de couvercle, un quelconque accessoire, tel que, par exemple, un embout propre à le fermer transversalement à l'une de ses extrémités, et un ou plusieurs supports propres à recevoir des appareillages électriques

A ce sujet, on connaît du document DE-U-7 701 076 une goulotte du type précité et une pièce de serrage rapporté à un couvercle qui s'insére dans une rainure formée par un retour à l'équerre d'une aile latérale du socle de la goulotte, pour permettre le montage du couvercle sur ledit socle.

Le problème, en l'espèce, est que, eu égard aux inévitables tolérances de fabrication, le maintien d'un tel accessoire sur un tel socle, et, donc, sur la goulotte correspondante, peut être plus ou moins incertain, et que, compte tenu du processus même de fabrication par extrusion de ce socle, il est malaisé de prévoir sur celui-ci une quelconque disparité ou irrégularité de nature à conforter ce maintien.

Or, pour satisfaire aux dispositions normatives d'étanchéité en vigueur en la matière, il importe que ce maintien soit suffisant pour résister à des chocs, soit que ces chocs soient directement appliqués à l'accessoire en cause, soit qu'ils lui soient transmis par la goulotte elle-même ou par un quelconque autre accessoire également rapporté sur celle-ci.

La présente invention a d'une manière générale pour objets un procédé et un dispositif permettant de répondre de manière très simple à cette exigence.

Le procédé selon l'invention est défini par les caractéristiques de la revendication 1.

Préférentiellement, le dispositif de doublage suivant l'invention est défini par les caractéristiques de la revendication 4. Des caractéristiques supplémentaires au dispositif sont décrites dans les revendications 5 à 23.

Grâce à un tel dispositif de doublage, il est assuré, entre l'accessoire et le socle de la goulotte, une liaison suffisante pour que le maintien de cet accessoire sur cette goulotte satisfasse aux dispositions normatives d'étanchéité en la matière.

Préférentiellement, également, il se présente sous la forme générale d'un cavalier dont la mise en place se fait avantageusement par l'avant, perpendiculairement à la direction d'allongement du socle à équiper.

Sa mise en place s'en trouve facilitée, notamment lorsque la goulotte à équiper est elle-même déjà rapportée sur un quelconque support.

Les caractéristiques et avantages de l'invention ressortiront d'ailleurs de la description qui va suivre, à titre d'exemple, en référence aux dessins schématiques annexés sur lesquels :
la figure 1 est une vue partielle en perspective éclatée d'une goulotte sur le socle de laquelle est rapporté localement un dispositif de doublage suivant l'invention et d'un accessoire à rapporter également sur ce socle ;
la figure 2 est, à échelle supérieure, une vue en perspective du dispositif de doublage suivant l'invention, représenté isolément ;
la figure 3 est une vue en plan de ce dispositif de doublage, suivant la flèche III de la figure 2 ;
la figure 4 en est une vue en coupe longitudinale, suivant la ligne IV-IV de la figure 2 ;
la figure 5 en est une vue de bout, suivant la flèche V de la figure 3 ;
la figure 6 est une vue partielle en perspective, qui, dérivée de celle de la figure 1, illustre la mise en place du dispositif de doublage suivant l'invention sur le socle de la goulotte à équiper ;
la figure 7 est une vue en perspective de l'accessoire à rapporter sur le socle de la goulotte à équiper, vu de l'intérieur, suivant la flèche VII de la figure 1 ;
la figure 8 est, à échelle différente, et suivant la ligne VIII-VIII de la figure 1, une vue en coupe transversale de la goulotte équipée du dispositif de doublage suivant l'invention et de l'accessoire rapporté sur son socle ;

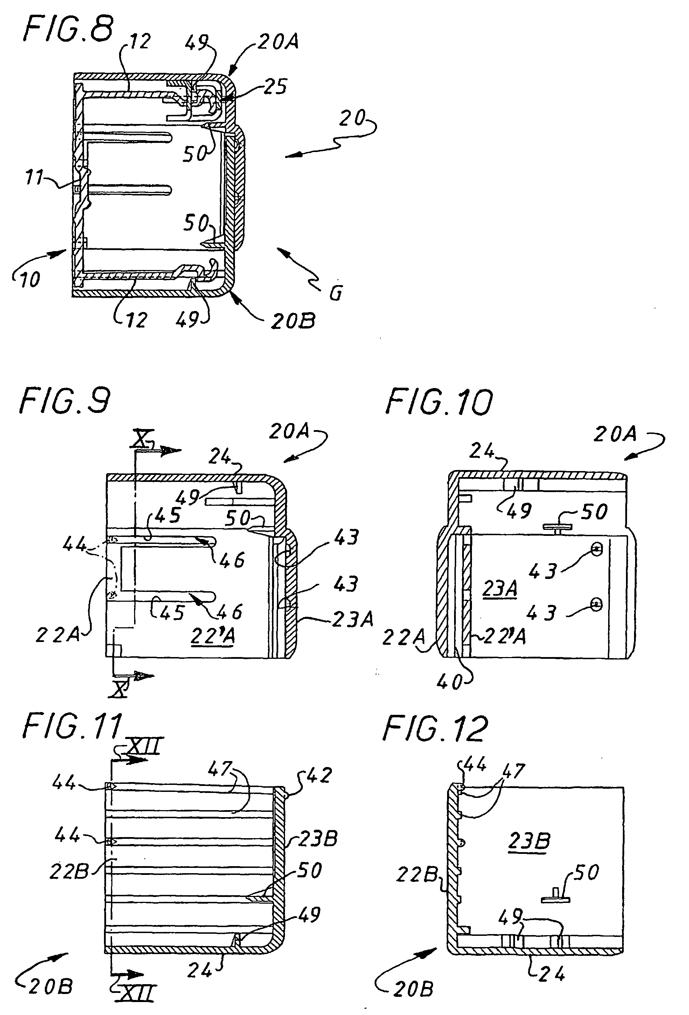

la figure 9 est, dérivée de celle de la figure 8, une vue en coupe transversale d'une des parties constitutives de cet accessoire ;
la figure 10 en est une autre vue en coupe transversale, suivant la ligne brisée X-X de la figure 9 ;
la figure 11 est, dérivée de celle de la figure 8, une vue en coupe transversale de l'autre des parties constitutives de l'accessoire en cause ;
la figure 12 en est une autre vue en coupe transversale, suivant la ligne XII-XII de la figure 11.

Tel qu'illustré sur ces figures, il s'agit, globalement, de l'équipement d'une goulotte G dont le socle 10 présente, extérieurement, en section transversale, un profil en U, avec une semelle médiane 11 et deux ailes latérales 12.

Par sa semelle médiane 11, ce socle 10 est destiné à être appliqué à un quelconque support, par exemple un mur, non représenté.

Dans la forme de réalisation représentée, la goulotte G est supposée être de hauteur et de largeur relativement faibles, à la manière des goulottes communément appelées moulures, et son socle 10 est dépourvu de toute cloison interne.

Mais il va de soi que ce socle 10 pourrait tout aussi bien comporter une ou plusieurs de telles cloisons.

Quoi qu'il en soit, il s'agit d'un profilé, en matière synthétique, réalisé par extrusion.

De manière usuelle, il est associé, à ce socle 10, pour sa fermeture, un couvercle 13, l'ensemble formant la goulotte G.

Comme le socle 10, le couvercle 13 est un profilé, en matière synthétique, réalisé par extrusion.

Dans la forme de réalisation représentée, il s'agit, à titre d'exemple, d'un couvercle coiffant, c'est-à-dire d'un couvercle présentant, outre une paroi de façade 14, deux ailes latérales 15, par lesquelles il est apte à s'engager, de l'extérieur, sur le socle 10, sur toute la hauteur de celui-ci.

Bien entendu, pour le maintien transversal de ce couvercle 13 sur le socle 10, il est prévu des moyens d'encliquetage.

Dans la forme de réalisation représentée, ces moyens d'encliquetage résultent de ce que, d'une part, chacune des ailes latérales 12 du socle 10 forme, par elle-même, longitudinalement, une rainure 16 à concavité tournée vers l'extérieur, et de ce que, d'autre part, chacune des ailes latérales 15 du couvercle 13 comporte, longitudinalement, en saillie sur sa face interne, une nervure 18 propre à s'engager dans la rainure 16 de l'aile latérale 12 correspondante du socle 10.

Dans la forme de réalisation représentée, chacune des ailes latérales 12 du socle 10 forme, par ailleurs, sur sa tranche, pour parfaire l'assise du couvercle 13, un retour en équerre 19, qui, sensiblement parallèle à la semelle médiane 11, est dirigé vers l'intérieur.

Les dispositions qui précèdent sont bien connues par elles-mêmes, et, ne relevant pas en propre de la présente invention, elles ne seront pas décrites plus en détail ici.

Outre le couvercle 13, le socle 10 peut être appelé à recevoir, par emboîtement, un quelconque accessoire.

Les figures illustrent, à titre d'exemple, le cas où cet accessoire est un embout 20 à rapporter à l'extrémité de la goulotte G, et, donc, du socle 10, pour fermer transversalement cette goulotte 10.

Cet embout 20, dont une description plus complète sera faite ultérieurement, se substitue localement au couvercle 13, tout en pouvant éventuellement recouvrir au moins partiellement celui-ci, et il présente donc, globalement, outre une paroi transversale 22 propre à fermer transversalement le socle 10, une paroi de façade 23 et deux parois latérales 24.

Si le maintien transversal de cet embout 20 sur le socle 10 peut être assuré par encliquetage, à la manière du couvercle 13, il n'en est pas de même de son maintien longitudinal.

Suivant l'invention, pour affermir ce maintien, on rapporte, sur le socle 10 de la goulotte G à équiper, préalablement à l'embout 20, au moins un dispositif de doublage 25 propre à former localement une surépaisseur E sur ce socle 10.

Dans la forme de mise en oeuvre représentée, un tel dispositif de doublage 25 est rapporté sur l'une au moins des ailes latérales 12 du socle 10, le long du bord libre de celle-ci.

Par exemple, et tel que représenté, seule l'une de ces ailes latérales 12 est ainsi équipée d'un tel dispositif de doublage 25.

S'agissant, comme en l'espèce, d'affermir le maintien d'un embout 20, ce dispositif de doublage 25 est disposé à l'extrémité de l'aile latérale 12 sur laquelle il est rapporté.

Préférentiellement, et cela est le cas dans la forme de réalisation représentée, le dispositif de doublage 25 suivant l'invention est apte à former une surépaisseur E tant en façade, sur la tranche de l'aile latérale 12 sur laquelle il est rapporté, que latéralement, sur l'une au moins des faces externe et/ou interne de cette aile latérale 12.

Lorsque, comme en l'espèce, l'accessoire dont il s'agit d'affermir le maintien est un embout destiné à être rapporté de l'extérieur sur la goulotte G, et, plus précisément, sur son socle 10, la surépaisseur E recherchée doit préférentiellement intervenir sur la face externe de l'aile latérale 12 sur laquelle le dispositif de doublage 25 suivant l'invention est rapporté.

Mais, dans la forme de réalisation représentée, le dispositif de doublage 25 suivant l'invention est apte à former une surépaisseur E sur l'une et l'autre des faces externe et interne d'une telle aile latérale 12, pour être en mesure de pouvoir indifféremment être rapporté sur l'une ou l'autre des ailes latérales 12 du socle 10.

En outre, dans cette forme de réalisation, le dispositif de doublage 25 suivant l'invention se présente sous la forme générale d'un cavalier adapté à venir coiffer localement la tranche d'une quelconque de ces ailes latérales 12.

Il est ainsi avantageusement propre à une mise en place par l'avant sur le socle 10 de la goulotte G à équiper, perpendiculairement à la direction d'allongement de ce socle 10, ce qui rend particulièrement aisée cette mise en place.

Dans la forme de réalisation représentée, le dispositif de doublage 25 suivant l'invention comporte, globalement, d'une part, une platine 26, par laquelle il est apte à se superposer localement au socle 10 de la goulotte G à équiper, et, plus précisément, au retour en équerre 19 de l'aile latérale 12 concernée de ce socle 10, et, d'autre part, des moyens de fixation 27, qui, suivant des dispositions décrites plus en détail ultérieurement, sont propres à permettre son assujettissement à ce socle 10.

Par exemple, et tel que représenté, la platine 26 est sensiblement plane, et elle a un contour rectangulaire relativement allongé.

Dans la forme de réalisation représentée, les moyens de fixation 27 sont des moyens d'ancrage aptes à pénétrer à force dans le socle 10 de la goulotte G à équiper.

Plus précisément, ces moyens de fixation 27 comportent au moins un bras d'ancrage 28, qui, raccordé à la platine 26 par un jambage 29, est équipé d'au moins une griffe 30, et qui est globalement déformable.

Préférentiellement, et cela est le cas dans la forme de réalisation représentée, les moyens de fixation 27 comportent deux bras d'ancrage 28, 28', qui interviennent chacun respectivement de part et d'autre de la platine 26, et qui ont des constitutions similaires.

Pour chacun des bras d'ancrage 28, 28', le jambage 29 s'étend globalement transversalement par rapport à la platine 26, et perpendiculairement à celle-ci, tout en se raccordant à cette platine 26 par un large arrondi.

Dans la forme de réalisation représentée, les deux jambages 29 que comporte le dispositif de doublage 25 suivant l'invention sont établis en regard l'un de l'autre, et ils ont sensiblement la même hauteur.

Par exemple, et tel que représenté, ces jambages 29 interviennent à l'une des extrémités de la platine 26.

Dans la forme de réalisation représentée, chacun des bras d'ancrage 28, 28' s'étend en porte à faux à compter de l'extrémité libre du jambage 29 qui le porte, et il est sensiblement en équerre par rapport à celui-ci.

Les deux bras d'ancrage 28, 28' interviennent ainsi sensiblement à un même niveau par rapport à la platine 26, à distance de celle-ci.

Ils s'étendent en outre globalement suivant un plan parallèle à cette platine 26.

Mais, tel que schématisé sur la figure 3, leur direction d'allongement D2 fait initialement un angle A, A' avec celle D1 de la platine 26, et ils vont en s'écartant de cette dernière au fur et à mesure qu'ils s'éloignent du jambage 29 qui les porte.

Autrement dit, les bras d'ancrage 28, 28' divergent initialement l'un par rapport à l'autre à compter des jambages 29.

Dans la forme de réalisation représentée, chacun des bras d'ancrage 28, 28' est articulé par une zone charnière 32 au jambage 29 qui le porte.

Par exemple, cette zone charnière 32 peut résulter d'une simple capacité de déformation de la matière constitutive du dispositif de doublage 25 suivant l'invention.

En l'espèce, il s'agit d'une capacité de déformation permanente.

Quoi qu'il en soit, cette zone charnière 32 s'étend sensiblement perpendiculairement à la platine 26, suivant la tranche correspondante du jambage 29 concerné.

Dans la forme de réalisation représentée, les bras d'ancrage 28, 28' ne comportent chacun qu'une griffe 30, et celle-ci est disposée à leur extrémité libre.

Pour chacun des bras d'ancrage 28, 28', la griffe 30 est issue d'une des tranches longitudinales de ce bras d'ancrage 28, 28' en formant localement un retour en équerre pour celui-ci.

Par exemple, et tel que représenté, il s'agit de celle des tranches longitudinales d'un tel bras d'ancrage 28, 28' qui est la plus proche de la platine 26.

Pour chacun des bras d'ancrage 28, 28', la griffe 30 s'étend en outre globalement perpendiculairement à un tel bras d'ancrage 28, 28', en direction de la platine 26, mais suivant un plan sensiblement parallèle à celle-ci.

Pour ne pas être susceptibles d'interférer intempestivement l'une avec l'autre, les deux griffes 30 sont décalées l'une par rapport à l'autre d'un des bras d'ancrage 28, 28' à l'autre.

Il peut s'agir aussi bien d'un décalage en hauteur que d'un décalage longitudinal.

Dans la forme de réalisation représentée, cependant, les deux griffes 30 interviennent à un même niveau par rapport à la platine 26, à distance de celle-ci, et leur décalage est donc seulement longitudinal.

En pratique, ce décalage longitudinal résulte simplement de ce que les bras d'ancrage 28, 28' ont des longueurs différentes l'un par rapport à l'autre.

Corollairement, l'angle A' relatif au bras d'ancrage 28' le plus court, est plus grand que l'angle A relatif au bras d'ancrage 28 le plus long.

D'un bras d'ancrage 28, 28' à l'autre, les deux griffes 30 ont une constitution similaire, voire même identique.

Chacune d'elles est épointée à son extrémité, et comporte, transversalement, à distance de celle-ci, au moins une barbelure 33.

Par exemple, et tel que représenté, seule une telle barbelure 33 est prévue.

Préférentiellement, l'un au moins des bords longitudinaux 34, 35 des griffes 30 est effilé, à la manière du tranchant d'une lame.

Dans la forme de réalisation représentée, seul l'un de ces bords longitudinaux 34, 35 est ainsi effilé, et il s'agit, en pratique, du bord longitudinal 34 interne, c'est-à-dire du bord longitudinal le moins éloigné du jambage 29 correspondant.

Corollairement, le bord longitudinal 35 externe, c'est-à-dire le bord longitudinal le plus éloigné du jambage 29, a, dans cette forme de réalisation, un contour circulaire, en étant globalement centré sur ce jambage 29.

Dans la forme de réalisation représentée, le dispositif de doublage 25 suivant l'invention comporte, en outre, latéralement, à distance des jambages 29 portant les bras d'ancrage 28, 28', deux autres jambages 36.

Par exemple, et tel que représenté, ces jambages 36 sont établis en regard l'un de l'autre, à l'extrémité de la platine 26 opposée à celle où interviennent les jambages 29 porteurs des bras d'ancrage 28, 28'.

Comme ces jambages 29, ils s'étendent globalement transversalement par rapport à la platine 26, et perpendiculairement à celle-ci, en se raccordant à cette platine 26 par un large arrondi.

En outre, leur écartement, c'est-à-dire la distance qui les sépare l'un de l'autre, est sensiblement égal à l'écartement des jambages 29.

Mais, dans la forme de réalisation représentée, ils ont une hauteur inférieure à celle de ces derniers.

Enfin, dans la forme de réalisation représentée, le dispositif de doublage 25 suivant l'invention comporte, transversalement par rapport à la platine 26, à l'une des extrémités de celle-ci, et, plus précisément, à celle de ses extrémités où interviennent les jambages 29 porteurs des bras d'ancrage 28, 28', une patte d'arrêt 38.

Par exemple, et tel que représenté, cette patte d'arrêt 38 s'étend sur toute la largeur de la platine 26, en formant en quelque sorte un prolongement, plié à l'équerre, de celle-ci.

Sensiblement égale à celle des jambages 36, la hauteur de cette patte d'arrêt 38 est inférieure à celle des jambages 29 portant les bras d'ancrage 28, 28'.

Préférentiellement, le dispositif de doublage 25 suivant l'invention vient d'un seul tenant d'un flan métallique, par découpe et pliage de ce flan.

Pour sa mise en place, il peut par exemple être procédé comme suit.

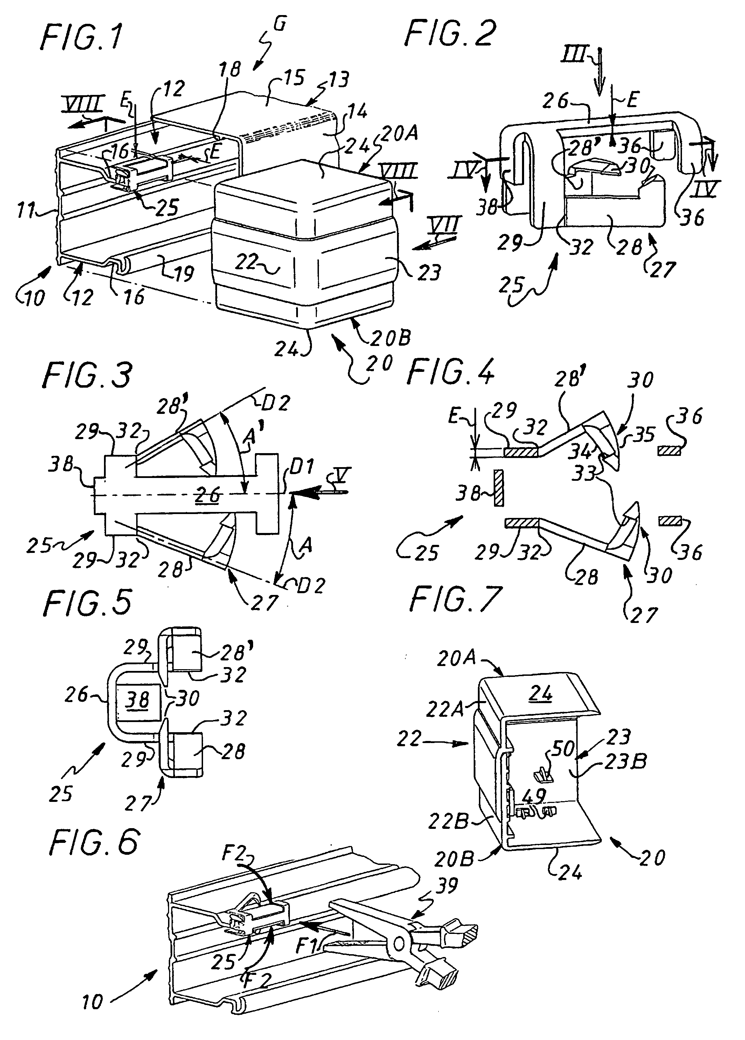

Dans un premier temps, et comme déjà indiqué précédemment, ce dispositif de doublage 25 est engagé, de l'avant, suivant la flèche F1 de la figure 6, sur la tranche de l'aile latérale 12 du socle 10 de la goulotte G sur laquelle il doit être rapporté.

Il est alors ajusté longitudinalement en position sur cette aile latérale 12, de manière à ce que sa patte d'arrêt 38 vienne en butée contre l'extrémité de celle-ci.

Dans un deuxième temps, ses bras d'ancrage 28, 28' sont forcés en direction l'un de l'autre, tel que schématisé par des flèches F2 sur la figure 6.

Par exemple, il est mis en oeuvre, pour ce faire, une pince 39.

Quoi qu'il en soit, celle au moins des griffes 30 qui se trouve portée par le bras d'ancrage 28, 28' le plus à l'extérieur vient perforer l'aile latérale 12 concernée du socle 10, ce qui suffit au maintien tant longitudinal que transversal du dispositif de doublage 25 sur cette aile latérale 12.

Ainsi rapporté sur le socle 10, le dispositif de doublage 25 suivant invention forme, localement, tant sur la tranche de l'aile latérale 12 concernée de ce socle 10 que sur la face externe de celle-ci, une surépaisseur E égale à l'épaisseur E de son flan initial, c'est-à-dire à l'épaisseur E de sa platine 26 et de ses jambages 29.

Cette surépaisseur E suffit pour absorber les éventuelles tolérances de fabrication entre le socle 10 et l'embout 20.

Le maintien de cet embout 20 sur le socle 10, et, donc, sur la goulotte G, s'en trouve avantageusement affermi.

Dans la forme de réalisation représentée, l'embout 20 est en deux parties 20A, 20B, qui forment chacune individuellement ses deux parois latérales 24 et qui forment conjointement sa paroi transversale 22 et sa paroi de façade 23, en comportant chacune respectivement une paroi transversale 22A, 22B, de fermeture, et une paroi de façade 23A, 23B.

Autrement dit, chacune de ces parties 20A, 20B comporte, en trièdre, une paroi transversale 22A, 22B, une paroi de façade 23A, 23B, et une paroi latérale 24.

Emboîtées l'une dans l'autre, les deux parties 20A, 20B constitutives de l'embout 20 sont montées réglables en position l'une par rapport à l'autre, pour une adaptation éventuelle de l'embout 20 à des largeurs différentes pour le socle 10 sur lequel il doit être rapporté, et, donc, pour la goulotte G.

Par exemple, la partie 20A constitue une partie femelle dans laquelle s'emboîte à coulissement la partie 20B, qui, elle, constitue une partie mâle.

A cet effet, la paroi transversale 22A de cette partie 20A est doublée intérieurement, sur une portion de sa largeur à compter de son bord libre, par une paroi interne 22'A, qui forme avec elle une poche 40 propre à recevoir la paroi transversale 22B de la partie 20B.

Corollairement, pour permettre le chevauchement nécessaire, la portion de la paroi transversale 22A de la partie 20A ainsi doublée par une paroi interne 22'A est décalée transversalement vers l'extérieur par rapport à la partie courante de cette paroi transversale 22A, et il en est de même pour la paroi de façade 23A.

Préférentiellement, il est prévu, entre les deux parties 20A, 20B, des moyens d'emboîtement complémentaires de nature à permettre, de manière débrayable, un blocage en position de ces deux parties 20A, 20B l'une par rapport à l'autre.

Dans la forme de réalisation représentée, ces moyens de blocage comportent, notamment, un bossage 42, qui, en saillie sur la paroi de façade 23B de la partie 20B, est apte à coopérer en emboîtement avec l'un ou l'autre de deux logements 43 prévus en creux à distance l'un de l'autre sur la paroi de façade 23A de la partie 20A.

Ils comportent, en outre, deux bossages 44, qui, prévus en saillie sur la paroi transversale 22B de la partie 20B, sont destinés à coopérer en butée avec des épaulements 45 prévus en correspondance sur la paroi interne 22'A de la partie 20A.

Par exemple et tel que représenté, ces épaulements 45 sont formés par l'un des flancs de fentes 46 affectant localement cette paroi interne 22'A.

En outre, dans la forme de réalisation représentée, les bossages 44 interviennent en saillie sur des nervures 47 prévues elles-mêmes en saillie sur la paroi transversale 22B de la partie 20B pour le renfort de cette paroi transversale 22B.

Il résulte de ce qui précède, que, dans la forme de réalisation représentée, les deux parties 20A, 20B constitutives de l'embout 20 peuvent occuper l'une par rapport à l'autre l'une ou l'autre de deux positions stables bien déterminées.

Par ailleurs, dans la forme de réalisation représentée, chacune des parties 20A, 20B constitutives de l'embout 20 comporte, en saillie sur la face interne de sa paroi latérale 24, au moins une console 49 propre à en permettre l'encliquetage dans la rainure 16 de l'aile latérale 12 correspondante du socle 10 de la goulotte G concernée.

Par exemple, et tel que représenté, il n'est prévu qu'une console 49 sur la partie 20A, tandis que la partie 20B comporte, à distance l'une de l'autre, deux consoles 49.

Enfin, dans la forme de réalisation représentée, chacune des parties 20A, 20B constitutives de l'embout 20 porte, également, en saillie sur la face interne de sa paroi de façade 23A, 23B, au moins une patte 50, pour son blocage en rotation vis-à-vis du socle 10, et, donc, de la goulotte G.

Par exemple, et tel que représenté, seule une telle patte 50 est prévue sur chacune des deux parties 20A, 20B.

Bien entendu, la présente invention ne se limite pas aux formes de réalisation décrites et représentées, mais englobe toute variante d'exécution pour chacune de celles-ci, dans le cadre des revendications ci-jointes.

En outre, le domaine d'application de l'invention n'est pas limité au seul cas où l'accessoire à rapporter sur la goulotte à équiper est un embout, mais s'étend tout aussi bien à n'importe quel autre type d'accessoire.

Par exemple, cet accessoire peut tout aussi bien être un support propre à recevoir un quelconque appareillage électrique.

## Revendications

1. Procédé pour affermir le maintien, sur une goulotte, d'un quelconque accessoire à rapporter par emboîtement sur le socle de celle-ci, ledit socle (10) présentant, extérieurement, en section transversale, un profil en U, avec une semelle médiane (11) et deux ailes latérales (12), **caractérisé en ce qu'**on fixe, au préalable, sur l'une au moins des ailes latérales (12) de ce socle (10), le long du bord libre de celle-ci, au moins un dispositif de doublage (25) propre à former localement une surépaisseur (E) tant en façade sur la tranche de l'aile latérale (12) sur laquelle il est rapporté, que latéralement sur la face externe de cette aile (12).

2. Procédé suivant la revendication 1, **caractérisé en ce qu'**on dispose le dispositif de doublage (25) à l'extrémité de l'aile latérale (12) sur laquelle il est rapporté.

3. Procédé suivant l'une quelconque des revendications 1 ou 2, **caractérisé en ce qu'**on choisit, pour dispositif de doublage (25), un dispositif de doublage (25) apte à former également une surépaisseur (E), latéralement, sur la face interne de cette aile latérale (12).

4. Dispositif de doublage pour goulotte dont le socle (10) présente, extérieurement, en section transversale, un profil en U, avec une semelle médiane (11) et deux ailes latérales (12), **caractérisé en ce que**, pour la mise en oeuvre d'un procédé conforme à l'une quelconque des revendications 1 à 3, il comporte, d'une part, une platine (26) et un jambage (29) s'étendant globalement transversalement par rapport à la platine, par lesquels il est apte à se superposer localement tant en façade à la tranche de l'aile latérale (12) sur laquelle il est rapporté, que latéralement à la face externe de cette aile (12), et, d'autre part, des moyens de fixation (27), qui sont propres à permettre son assujettissement au socle (10).

5. Dispositif de doublage selon la revendication 4, **caractérisé en ce que** ledit jambage (29) forme une butée pour une console (49) prévue en saillie sur une face interne d'une paroi latérale (24) d'un accessoire (20) rapporté par encliquetage sur le socle (10) de la goulotte, de façon à immobiliser en translation, selon la direction longitudinale de la goulotte, ledit accessoire (20) sur ledit socle (10).

6. Dispositif de doublage suivant l'une des revendications 4 ou 5, **caractérisé en ce que** ses moyens de fixation (27) sont des moyens d'ancrage aptes à pénétrer à force dans le socle (10).

7. Dispositif de doublage suivant la revendication 6, **caractérisé en ce que** les moyens de fixation (27) comportent au moins un bras d'ancrage (28, 28'), qui, raccordé à la platine (26) par un jambage (29), est équipé d'au moins une griffe (30).

8. Dispositif de doublage suivant la revendication 7, **caractérisé en ce que** le bras d'ancrage (28, 28') s'étend globalement suivant un plan parallèle à la platine (26).

9. Dispositif de doublage suivant la revendication 8, **caractérisé en ce que** la direction d'allongement (D2) du bras d'ancrage (28, 28') fait initialement un angle (A, A') avec celle (D1) de la platine (26), et ce bras d'ancrage (28, 28') s'écarte de la platine (26) au fur et à mesure qu'il s'éloigne du jambage (29) qui le porte.

10. Dispositif de doublage suivant l'une quelconque des revendications 7 à 9, **caractérisé en ce que** le bras d'ancrage (28, 28') est articulé au jambage (29) qui le porte.

11. Dispositif de doublage suivant l'une quelconque des revendications 7 à 10, **caractérisé en ce que** la griffe (30) s'étend globalement perpendiculairement au bras d'ancrage (28, 28').

12. Dispositif de doublage suivant la revendication 11, **caractérisé en ce que** la griffe (30) s'étend suivant un plan sensiblement parallèle à la platine (26).

13. Dispositif de doublage suivant l'une quelconque des revendications 11, 12, **caractérisé en ce que** la griffe (30) est issue d'une des tranches longitudinales du bras d'ancrage (28, 28'), en formant localement un retour en équerre pour celui-ci.

14. Dispositif de doublage suivant l'une quelconque des revendications 7 à 13, **caractérisé en ce que** la griffe (30) comporte transversalement au moins une barbelure (33).

15. Dispositif de doublage suivant l'une quelconque des revendications 7 à 14, **caractérisé en ce que** la griffe (30) est épointée à son extrémité.

16. Dispositif de doublage suivant l'une quelconque des revendications 7 à 15, **caractérisé en ce que** l'un au moins des bords longitudinaux (34, 35) de la griffe (30) est effilé, à la manière du tranchant d'une lame.

17. Dispositif de doublage suivant l'une quelconque des revendications 7 à 16, **caractérisé en ce que** le bord longitudinal (35) de la griffe (30) le plus éloigné du jambage (29) portant le bras d'ancrage (28, 28') a un contour circulaire, en étant globalement centré sur ce jambage (29).

18. Dispositif de doublage suivant l'une quelconque des revendications 7 à 17, **caractérisé en ce que** ses moyens de fixation (27) comportent deux bras d'ancrage (28, 28'), qui interviennent chacun respectivement de part et d'autre de sa platine (26).

19. Dispositif de doublage suivant la revendication 18, **caractérisé en ce que**, d'un bras d'ancrage (28, 28') à l'autre, les griffes (30) sont décalées l'une par rapport à l'autre.

20. Dispositif de doublage suivant l'une quelconque des revendications 18, 19, **caractérisé en ce qu'**il comporte, en outre, latéralement, à distance des jambages (29) portant les bras d'ancrage (28, 28'), deux autres jambages (36).

21. Dispositif de doublage suivant l'une quelconque des revendications 7 à 20, **caractérisé en ce que**, à l'une des extrémités de sa platine (26), il comporte, transversalement par rapport à celle-ci, une patte d'arrêt (38).

22. Dispositif de doublage suivant l'une quelconque des revendications 4 à 21, **caractérisé en ce qu'**il vient d'un seul tenant d'un flan métallique, par découpe et pliage de ce flan.

23. Dispositif de doublage suivant l'une quelconque des revendications 4 à 22, **caractérisé en ce qu'**il se présente sous la forme générale d'un cavalier propre à une mise en place par l'avant, perpendiculairement à la direction d'allongement du socle (10) de la goulotte (G) à équiper.

## Patentansprüche

1. verfahren zur Verstärkung des Halts eines beliebigen Zubehörs an einer Rinne, das durch Einstecken an deren Sockel anzubringen ist, wobei der Sockel (10) außen im Querschnitt ein U-Profil mit einem Mittelboden (11) und zwei Seitenwangen (12) aufweist, **dadurch gekennzeichnet, daß** man zuvor auf mindestens einer der Seitenwangen (12) des Sockels (10) längs ihres freien Randes mindestens eine Dopplungsvorrichtung (25) befestigt, die geeignet ist, sowohl stirnseitig auf der Kante der Seitenwange (12), an der sie angebracht ist, als auch seitlich auf der Außenseite dieser Wange (12) örtlich eine Verdickung (E) zu bilden.

2. Verfahren nach Anspruch 1, **dadurch gekennzeichnet, daß** man die Dopplungsvorrichtung (25) am Ende der Seitenwange (12), an der sie angebracht wird, anordnet.

3. Verfahren nach einem der Ansprüche 1 oder 2, **dadurch gekennzeichnet, daß** man für die Dopplungsvorrichtung (25) eine Dopplungsvorrichtung (25) wählt, die geeignet ist, auch seitlich auf der Innenseite dieser Seitenwange (12) eine Verdickung (E) zu bilden.

4. Dopplungsvorrichtung für eine Rinne, deren Sockel (10) außen im Querschnitt ein U-Profil mit einem Mittelboden (11) und zwei Seitenwangen (12) aufweist, **dadurch gekennzeichnet, daß** sie für die Durchführung eines Verfahrens nach einem der Ansprüche 1 bis 3 einerseits eine Platte (26) und einen sich insgesamt quer zur Platte erstreckenden Schenkel (29), mit denen sie geeignet ist, sich örtlich sowohl frontseitig der Kante der Seitenwange (12), an der sie angebracht ist, als auch seitlich der Außenseite dieser Wange (12) zu überlagern, und andererseits Befestigungsmittel (27) aufweist, die geeignet sind, ihren Befestigung am Sockel (10) zu gestatten.

5. Dopplungsvorrichtung nach Anspruch 4, **dadurch gekennzeichnet, daß** der Schenkel (29) einen Anschlag für eine Konsole (49) bildet, die auf einer Innenseite einer Seitenwand (24) eines an dem Sockel (10) der Rinne durch Einklinken angebrachten Zubehörs (20) vorspringend vorgesehen ist, so daß das Zubehör (20) auf dem Sockel (10) in Translation in der Längsrichtung der Rinne blockiert wird.

6. Dopplungsvorrichtung nach einem der Ansprüche 4 oder 5, **dadurch gekennzeichnet, daß** ihre Befestigungsmittel (27) Verankerungsmittel sind, die geeignet sind, unter Kraftausübung in den Sockel (10) einzudringen.

7. Dopplungsvorrichtung nach Anspruch 6, **dadurch gekennzeichnet, daß** die Befestigungsmittel (27) mindestens einen Verankerungsarm (28, 28') aufweisen, der durch einen Schenkel (29) mit der Platte (26) verbunden ist und mit mindestens einer Klaue (30) versehen ist.

8. Dopplungsvorrichtung nach Anspruch 7, **dadurch gekennzeichnet, daß** der Verankerungsarm (28, 28') sich insgesamt in einer zur Platte (26) parallelen Ebene erstreckt.

9. Dopplungsvorrichtung nach Anspruch 8, **dadurch gekennzeichnet, daß** die Längserstreckungsrichtung (D2) des Verankerungsarms (28, 28') ursprünglich mit der (D1) der Platte (26) einen Winkel (A, A') bildet und dieser Verankerungsarm (28, 28')sich von der Platte (26) in dem Maße entfernt, in dem er sich von dem ihn tragenden Schenkel (29) entfernt.

10. Dopplungsvorrichtung nach einem der Ansprüche 7 bis 9, **dadurch gekennzeichnet, daß** der Verankerungsarm (28, 28') an dem ihn tragenden Schenkel (29) angelenkt ist.

11. Dopplungsvorrichtung nach einem der Ansprüche 7 bis 10, **dadurch gekennzeichnet, daß** die Klaue (30) sich insgesamt senkrecht zu dem Verankerungsarm (28, 28') erstreckt.

12. Dopplungsvorrichtung nach Anspruch 11, **dadurch gekennzeichnet, daß** die Klaue (30) sich in einer zur Platte (26) im wesentlichen parallelen Ebene erstreckt.

13. Dopplungsvorrichtung nach einem der Ansprüche 11, 12, **dadurch gekennzeichnet, daß** die Klaue (30) von einer der Längskanten des Verankerungsarms (28, 28') ausgeht, indem sie örtlich für diesen eine rechtwinklige Abwinklung bildet.

14. Dopplungsvorrichtung nach einem der Ansprüche 7 bis 13, **dadurch gekennzeichnet, daß** die Klaue (30) in Querrichtung mindestens einen Haken (33) aufweist.

15. Dopplungsvorrichtung nach einem der Ansprüche 7 bis 14, **dadurch gekennzeichnet, daß** die Klaue (30) an ihrem Ende zugespitzt ist.

16. Dopplungsvorrichtung nach einem der Ansprüche 7 bis 15, **dadurch gekennzeichnet, daß** mindestens einer der Längsränder (34, 35) der Klaue (30) nach der Art der Schneide einer Klinge geschärft ist.

17. Dopplungsvorrichtung nach einem der Ansprüche 7 bis 16, **dadurch gekennzeichnet, daß** der Längsrand (35) der Klaue (30), der von dem den Verankerungsarm (28, 28') tragenden Schenkel (29) am weitesten entfernt ist, einen kreisförmigen Umriß hat, der insgesamt auf diesem Schenkel (29) zentriert ist.

18. Dopplungsvorrichtung nach einem der Ansprüche 7 bis 17, **dadurch gekennzeichnet, daß** ihre Befestigungsmittel (27) zwei Verankerungsarme (28, 28') aufweisen, die jeweils zu beiden Seiten ihrer Platte (26) angeordnet sind.

19. Dopplungsvorrichtung nach Anspruch 18, **dadurch gekennzeichnet, daß** die Klauen (30) von einem Verankerungsarm (28, 28') zum anderen gegeneinander versetzt sind.

20. Dopplungsvorrichtung nach einem der Ansprüche 18, 19, **dadurch gekennzeichnet, daß** sie außerdem seitlich in einem Abstand von den die Verankerungsarme (28, 28') tragenden Schenkeln (29) zwei weitere Schenkel (36) aufweist.

21. Dopplungsvorrichtung nach einem der Ansprüche 7 bis 20, **dadurch gekennzeichnet, daß** sie an einem der Enden ihrer Platte (26) quer zu dieser einen Blockierlappen (38) aufweist.

22. Dopplungsvorrichtung nach einem der Ansprüche 4 bis 21, **dadurch gekennzeichnet, daß** sie aus einem Metallblech durch Schneiden und Biegen dieses Blechs einstückig hergestellt ist.

23. Dopplungsvorrichtung nach einem der Ansprüche 4 bis 22, **dadurch gekennzeichnet, daß** sie in der allgemeinen Form eines Reiters vorliegt, der für ein Aufsetzen von vorne, senkrecht zur Längserstreckungsrichtung des Sockels (10) der zu bestückenden Rinne (G) geeignet ist.

## Claims

1. A process for reinforcing the fit on a duct of any accessory to be fitted by locking engagement over the base member thereof, said base member (10) externally being of a U-shaped profile in cross-section with a central base portion (11) and two lateral limbs (12), **characterised by** fixing beforehand on one at least of the lateral limbs (12) of said base member (10) along the free edge thereof at least one sheathing device (25) capable of locally forming an increased thickness (E) both at a frontal position on the edge of the lateral limb (12) to which it is fitted and laterally on the external face of said limb (12).

2. A process according to claim 1 **characterised in that** the sheathing device (25) is disposed at the end of the lateral limb (12) on which it is fitted.

3. A process according to either one of claims 1 and 2 **characterised by** selecting as the sheathing device (25) a sheathing device (25) which is capable of also forming an increased thickness (E) laterally on the internal face of said lateral limb (12).

4. A sheathing device for a duct whose base member (10) externally has a U-shaped profile in cross-section with a central base portion (11) and two lateral limbs (12), **characterised in that**, for carrying out a process according to any one of claims 1 to 3, it comprises on the one hand a plate (26) and a leg means (29) extending generally transversely with respect to the plate, by way of which it is capable of being locally superposed both in a frontal position at the edge of the lateral limb (12) to which it is fitted and laterally to the external face of said limb (12) and on the other hand fixing means (27) which are capable of permitting it to be secured to the base member (10).

5. A sheathing device according to claim 4 **characterised in that** said leg means (29) forms an abutment for a bracket (49) provided in projecting relationship on an internal face of a lateral wall (24) of an accessory (20) fitted by clipping on to the base member (10) of the duct in such a way as to immobilise said accessory (20) on said base member (10) in respect of translation in the longitudinal direction of the duct.

6. A sheathing device according to one of claims 4 and 5 **characterised in that** its fixing means (27) are anchoring means capable of forcibly penetrating into the base member (10).

7. A sheathing device according to claim 6 **characterised in that** the fixing means (27) comprise at least one anchoring arm (28, 28') which, connected to the plate (26) by a leg means (29), is provided with at least one claw (30).

8. A sheathing device according to claim 7 **characterised in that** the anchoring arm (28, 28') extends generally in a plane parallel to the plate (26).

9. A sheathing device according to claim 8 **characterised in that** the direction of elongation (D2) of the anchoring arm (28, 28') initially forms an angle (A, A') with that (D1) of the plate (26) and said anchoring arm (28, 28') diverges from the plate (26) as it moves away from the leg means (29) carrying it.

10. A sheathing device according to any one of claims 7 to 9 **characterised in that** the anchoring arm (28, 28') is pivoted to the leg means (29) carrying it.

11. A sheathing device according to any one of claims 7 to 10 **characterised in that** the claw (30) extends generally perpendicularly to the anchoring arm (28, 28').

12. A sheathing device according to claim 11 **characterised in that** the claw (30) extends in a plane substantially parallel to the plate (26).

13. A sheathing device according to any one of claims 11 and 12 **characterised in that** the claw (30) extends from one of the longitudinal edges of the anchoring arm (28, 28'), locally forming a right-angled flange portion for same.

14. A sheathing device according to any one of claims 7 to 13 **characterised in that** the claw (30) transversely comprises at least one barb (33).

15. A sheathing device according to any one of claims 7 to 14 **characterised in that** the claw (30) is pointed at its end.

16. A sheathing device according to any one of claims 7 to 15 **characterised in that** one at least of the longitudinal edges (34, 35) of the claw (30) is tapered in the manner of the cutting edge of a blade.

17. A sheathing device according to any one of claims 7 to 16 **characterised in that** the longitudinal edge (35) of the claw (30), which is most remote from the leg means (29) carrying the anchoring arm (28, 28'), is of a circular contour being generally centered on said leg means (29).

18. A sheathing device according to any one of claims 7 to 17 **characterised in that** its fixing means (27) comprise two anchoring arms (28, 28') which are each operatively disposed on respective sides of its plate (26).

19. A sheathing device according to claim 18 **characterised in that**, from one anchoring arm (28, 28') to the other, the claws (30) are displaced relative to each other.

20. A sheathing device according to either one of claims 18 and 19 **characterised in that** it further comprises laterally at a spacing from the leg means (29) carrying the anchoring arms (28, 28') two other leg means (36).

21. A sheathing device according to any one of claims 7 to 20 **characterised in that** at one of the ends of its plate (26) it comprises a stop lug (38) transversely with respect to said plate.

22. A sheathing device according to any one of claims 4 to 21 **characterised in that** it is produced in one piece from a metal blank by cutting and bending said blank.

23. A sheathing device according to any one of claims 4 to 22 **characterised in that** it is in the general shape of an embracing member suitable for being set in position from the front perpendicularly to the direction of elongation of the base member (10) of the duct (G) to be equipped.
